# EUROPEAN PATENT SPECIFICATION

(11) **EP 2 132 960 B1**
(45) Date of publication and mention of the grant of the patent: **16.05.2012**
(21) Application number: 08719780.2
(22) Date of filing: 20.03.2008
(51) Int. Cl.: H05B 37/02

(54) **NATURAL DAYLIGHT MIMICKING SYSTEM AND USER INTERFACE**
SYSTEM ZUR NACHAHMUNG NATÜRLICHEN TAGESLICHTS UND BENUTZEROBERFLÄCHE DAFÜR
SYSTÈME IMITANT UNE LUMIÈRE DE JOUR NATURELLE ET INTERFACE UTILISATEUR

(30) Priority: 29.03.2007 EP 07105220
(43) Date of publication of application: 16.12.2009
(73) Proprietor: Koninklijke Philips Electronics N.V., 5621 BA Eindhoven (NL)
(72) Inventor: VAN DE SLUIS, Bartel Marinus, NL-5656 AE Eindhoven (NL); DIEDERIKS, Elmo Marcus Attila, NL-5656 AE Eindhoven (NL); BERGMAN, Anthonie Hendrik, NL-5656 AE Eindhoven (NL); VAN DEN BIGGELAAR, Theodorus Johannes Petrus, NL-5656 AE Eindhoven (NL)
(74) Representative: Bekkers, Joost J.J
(86) International application number: PCT/IB2008/051057
(87) International publication number: WO 2008/120127

(56) References cited:
- WO-A-96/28956
- WO-A-2006/129256
- US-A- 5 861 717
- US-A1- 2006 076 908

## Description

The present invention relates to an interaction system and user interface for mimicking and controlling natural daylight such as by changing attributes of artificial light throughout the day or other time periods, for example, in response to manipulating an input device, such as a knob, a slider, a pointer and/or selectable dials having indicators.

Advanced lighting systems are able to mimic the natural changes in intensity and color of daylight throughout the day. This enables a particular space, such as an office or a shop, to become a more natural environment by creating dynamic lighting conditions familiar to people. This is especially beneficial in environments that are relatively closed and/or windowless, such as shops, shopping malls, meeting rooms and cubicle offices.

Conventional lighting systems allow control of light sources, such as by dimming, switching on/off and color adjustments in order to provide an enriching experience and improve productivity, safety, efficiency and relaxation.

With the advent of controllable light sources, such as controllable and programmable light emitting diodes (LEDs) for example, complicated light effects may be produced. It is desirable to offer simple and intuitive user interfaces and to mask the system complexity from the user. In other words, it is desirable to make the control interfaces simple and easy to use. Controlling a lighting system in an easy and intuitive way, while masking the system complexity, is a challenge on its own. Solutions exist for different interaction paradigms of controlling (e.g., dimming) light sources to provide desired light effects.

For example, U.S. Patent No. 5,861,717 to Begemann and assigned to U.S Philips Corporation, which is incorporated herein by reference in its entirety, describes a lighting system for controlling color of an adjustable light source in dependence on a predetermined relationship between a measured daylight level and desired color temperature of the emitted artificial light. A control unit changes the color and intensity of the artificial light in dependence of the measured daylight level. A day calendar is provided for determining the day of the year and a clock is provided to determine the time of day. Using the day and time information, along with a predetermined relationship between the day of the year, time of day, and the mean daylight level, light is produced having desired color temperature and intensity.

Another conventional lighting control system is described in U.S. Patent Application Publication No. 2003/0028260 to Blackwell, which is incorporated herein by reference in its entirety. In Blackwell, programmable LEDs are controlled to provide complicated lighting effects, such as chasing a rainbow of colors by changing light attributes such as color, intensity, rate of change, direction of apparent propagation of light. A user interface such as a button; rotary, linear or variable switch; selector, pointer or dial is used to select a program from a memory for execution by a processor to provide desired light effects.

Other lighting control systems includes using a computer to select and control desired light effects, as described in U.S. Patent Application Publication No. 2005/0040774 to Mueller, which is incorporated herein by reference in its entirety. Mueller also describes a rotary switch to change the color temperature of light.

In U.S. Patent Nos. 5,343,121 and 5,589,741 to Terman, which are incorporated herein by reference in their entirety, an artificial illumination system varies light output with time in a manner corresponding to a selected time interval at a predetermined geographical location, including gradually changing illumination to accurately mimic natural light transitions at the selected geographic location and time interval. A comprehensive reference is used that specifies the expected momentary level of illumination on the earth's surface, such as skylight, sunlight, and moonlight, across a twenty-four hour day, at any day of the year and geographic latitude. A processor executes an algorithm to drive light sources to produce simulated natural illumination. Other natural phenomena affecting natural light conditions are also considered in the generation of artificial light to reproduce illumination concomitant of dynamic weather variation, such as a cloudiness factor, and bad weather for reducing the rate of increment and level of dawn illumination, for example.

In WO 2006/129256 A2 a sunny cloudy scale for setting color temperature of white lights is described. A light user interface includes a user controllable slider or knob providing a control signal to a light source, corresponding to the rotational position of the slider or knob. The labeling on the user interface includes an image of a cloud and an image of the sun or a combination thereof.

What is lacking in conventional light control systems is a simple user interface that provides real time automatic feedback of the current illumination, and allows for intuitive selection and production of a desired illumination as well as control of dynamically changing artificial illumination produced by the light sources.

For example, one of the problems with conventional systems is that the dynamics are pre-programmed and that the user cannot easily influence the lighting atmosphere. For instance, a user may have an energy dip, take a break or have a specific activity at a particular time of the day, and may want to temporarily adapt or change the lighting conditions. Further, besides mimicking the daylight of a particular time of day, a user may want to create a specific weather type. For instance, when it is raining, a shop manager may want to create a sunny atmosphere inside the shop to attract customers. Such tasks are not easily accomplished using conventional lighting controls.

One object of the present systems and methods is to overcome the disadvantages of conventional lighting user interfaces and control systems.

The object is solved by the features of the independent claims. According to illustrative embodiments, a lighting interaction system includes at least one light source to provide illumination and/or a light effect having variable light attributes, and a selection indicator having a plurality of indicators associated with light settings. A selector has a pointer which is configured to point to a first indicator of the selection indicator, due to rotation of the selector or the selection indicator. Activation of the selector controls the light source(s) to provide light having first light attributes associated with the first indicator. In a dynamic mode, alignment of the pointer with the various indicators changes as a function of time to point to different indicators and change the first light attributes in accordance with the currently aligned indicator. Instead or in addition to the at least one light source, other controllable devices, such as multimedia devices and aroma or scent generators, may be controlled to provide a total atmosphere effect that includes a light effect, an audio effect, a video effect and/or an olfactory effect.

The lighting interaction system further comprises a processor configured to control the light sources to provide the illumination having the variable light attributes in accordance with the different indicators pointed to by the selector and a memory operationally coupled to the processor and configured to store a plurality of light scripts for providing the illumination when executed by the processor. The lighting interaction system may even further comprises a selection indicator that includes at least two selectable dials, each selectable dial having an associated set of the plurality of indicators chosen from representations of time of day, description of a natural light condition, season of year, weather, and phase of a moon.

In a preferred embodiment of the method as claimed in claim 9, the pointer is moveable and selectable by pressing. The method may further preferably include the acts of: storing a plurality of lighting scripts in a memory; pressing at least one of the pointer and the selection indicator; and executing one script of the plurality of lighting scripts in response to the pressing act, said one script being associated with the at least one indicator aligned with the pointer. Moreover, the at least one indicator may include at least one representation of time of day, description of a natural light condition, season of year, weather, and phase of a moon.

Further areas of applicability of the present systems and methods will become apparent from the detailed description provided hereinafter. It should be understood that the detailed description and specific examples, while indicating exemplary embodiments of the systems and methods, are intended for purposes of illustration only and are not intended to limit the scope of the invention.

These and other features, aspects, and advantages of the apparatus, systems and methods of the present invention will become better understood from the following description, appended claims, and accompanying drawing where:
- Fig. 1: shows a block diagram of an interactive light control system according to one illustrative embodiment; and
- Fig. 2: shows an interactive system according to another illustrative embodiment; and
- Fig. 3: shows an interactive system according to another illustrative embodiment; and
- Fig. 4: shows an interactive system according to another illustrative embodiment; and
- Fig. 5: shows an interactive system according to another illustrative embodiment; and
- Fig. 6: shows an interactive system according to another illustrative embodiment; and
- Fig. 7: shows an interactive system according to another illustrative embodiment; and
- Fig. 8: shows an interactive system according to another illustrative embodiment; and
- Fig. 9: shows an interactive system according to another illustrative embodiment; and
- Fig. 10: shows an interactive system according to another illustrative embodiment; and
- Fig. 11: shows an interactive system according to another illustrative embodiment.

The following description of certain exemplary embodiments is merely exemplary in nature and is in no way intended to limit the invention, its applications, or uses. In the following detailed description of embodiments of the present systems and methods, reference is made to the accompanying drawings which form a part hereof, and in which are shown by way of illustration specific embodiments in which the described systems and methods may be practiced. These embodiments are described in sufficient detail to enable those skilled in the art to practice the presently disclosed systems and methods, and it is to be understood that other embodiments may be utilized and that structural and logical changes may be made without departing from the spirit and scope of the present system.

The following detailed description is therefore not to be taken in a limiting sense, and the scope of the present system is defined only by the appended claims. The leading digit(s) of the reference numbers in the figures herein typically correspond to the figure number, with the exception that identical components which appear in multiple figures are identified by the same reference numbers. Moreover, for the purpose of clarity, detailed descriptions of well-known devices, circuits, and methods are omitted so as not to obscure the description of the present system.

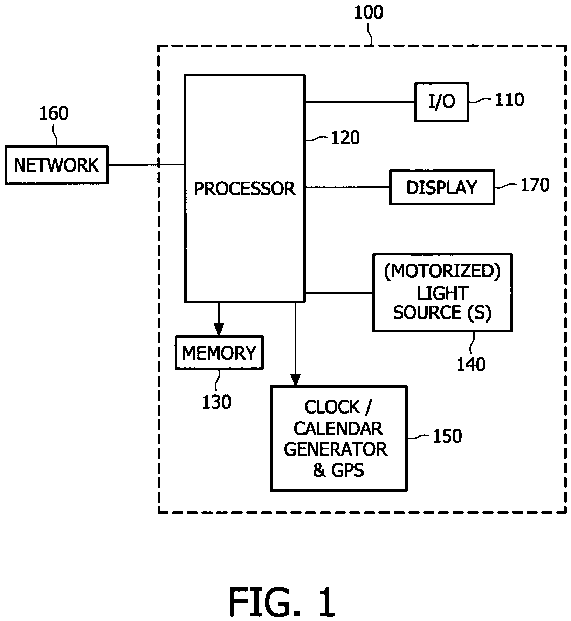

Fig. 1 shows a block diagram of one embodiment of an interactive lighting control system 100 that includes a user interface 110 operationally coupled to a processor 120. The processor 120 is also coupled to a memory 130 and is configured to receive user inputs from the user interface 110 and to control at least one light source 140 in accordance with the user input (received from the user interface 110) and/or upon execution of predetermined programs or light scripts stored in the memory 130. The light scripts include instructions to control the light sources to provide predetermined static and/or dynamically changing illumination as a function of one or various factors, such as time of day, day of year, season, weather, etc., by changing light attributes provided from the various light sources, such as intensity (i.e., dimming function), color, hue, saturation, direction and the like.

The light sources may include motors under the control of the processor 130 to change direction of the light sources, for example, and thus the direction of the light emanates therefrom at constant or variable speed, such as described in U.S. Patent Application Publication No. 2003/0028260 to Blackwell. Further, the processor 120 may also be configured to control the user interface 110 to provide real time feedback, such as visual feedback, of the current illumination and/or light settings of the light source(s) 140.

A generator 150 is operationally coupled to the processor 120 to provide clock information, for example, as described in U.S. Patent No. 5,861,717 to Begemann and U.S. Patent Nos. 5,343,121 and 5,589,741 to Terman, such as time of day, day of year, season and/or geographic location of the lighting control and interaction system 100. The calendar information may be manually set by the user or automatically generated and/or determined. For example, the generator 150 may access a network 160, such as the Internet, to receive (through a wired and/or wireless connection) the time, day, season, and/or current weather information. The geographic location may be manually provided by the user and stored in the memory 130. Alternatively, or in addition, the interactive light control system 100 may include a global positioning system (GPS) receiver that automatically receives the current geographic location.

Although one light source 140 is shown in Fig. 1, it should be understood that many controllable light sources may be provided which may be individually or collectively controlled in groups or sub-groups to provide a desired illumination, which may automatically change (e.g., without a user interface) in response to a selected or determined factor(s), such as time of day, day of year, and/or weather, geographic location and the like.

Light emitting diodes (LEDs) are particularly well suited light sources to controllably provide light of varying attributes, as LEDs may easily be configured to provide light with changing colors, intensity, hue, saturation and other attributes, and typically have electronic drive circuitry for control and adjustment of the various light attributes. However, any controllable light source may be used that is capable of providing lights of various attributes, such as various intensity levels, different colors, hues, saturation and the like, such as incandescent, fluorescent, halogen, or high intensity discharge (HID) light and the like, which may have a ballast or drivers for control of the various light attributes.

It should be understood that the various components of the interactive lighting control system 100 may be interconnected through a bus, for example, or operationally coupled to each other by any type of link, including wired or wireless link(s), for example. Further, the processor 120 and memory 130 may be centralized or distributed among the various system components where, for example, each LED light source 140 may have its own controller or processor and memory.

The user interface 110 may be a movable selector, such as a rotary knob or a slideable switch surrounded by at least one plate including indicators. The system 100 may also include one or more display device(s) 170 for user input and to provide feedback to the user. A display may be mounted on a wall near the movable selector, and/or may be included in the plats(s) surrounding the movable selector and used to display the indicators, for example.

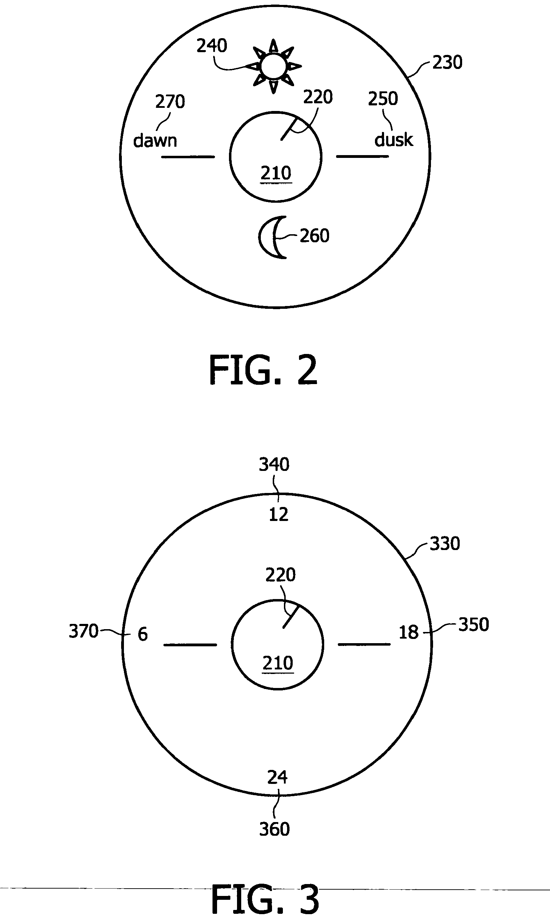

Fig. 2 shows an embodiment of the I/O device 110 comprising a daylight cycle knob 210 having a pointer 220 and surrounded by a plate 230 including indicators for different times of the day represented by words and symbols. Starting at the top of the plate 230 and moving clockwise by 90°, for example, the indicators include a representation of a sun 240, the word "dusk" 250, a representation of a moon 260, and the word "dawn" 270.

The knob 210 and/or the plate 230 may be rotatable to position or align the pointer 220 with a desired indicator of the plate 230. Illustratively, by rotating the knob 210 or the dial plate 230 and aligning the knob pointer 220 to these different positions or representations on the dial plate 230, light settings may be changed to provide illumination commensurate with the indicator pointed at by the pointer 220. For example, if the knob selector or pointer 220 is pointed to "dawn" 270, then the illumination provided by the light source(s) 140 resembles early morning light, such as diffused, soft red and dim light. If the knob is pointed to "dusk" 250, then a night time illumination is provided. The various illuminations associated with the various setting indicators on the dial plate 230 may be provided upon selection and execution by the processor 120 of associated light scripts stored in the memory 130.

Different indicators may be provided on the dial plate, as shown in Fig. 3. In Fig. 3, the knob 210 with the pointer 220 is surrounded by a dial plate 330, where numerals are provided at four plate positions 340, 350, 360, 370 to indicate time of day, for example. The daylight knob 210 has a range of twenty-four hours, and allows a user to influence the lighting conditions of a daylight mimicking lighting system, by merely turning the knob 210 to point at a desired position or indicator on the plate 330. In addition, the knob 210 or system may be activated to provide illumination such as, for example, by pressing the knob 210 or dial plate 330, after the pointer 220 is positioned at a desired position to indicate the desired illumination.

In a static mode, the daylight cycle knob 210 may be a static light setting knob, and the user may simply control the lighting conditions by putting the knob in a particular position. In the static mode, the knob 210 does not move automatically, e.g., does not rotate without user input. Thus, the pointer 220 remains aligned with the user - selected indicator on the dial plate and therefore the same lighting conditions or illumination are maintained (e.g., static illumination). Optionally, the knob may be pressed or otherwise activated to activate the light sources to provide the selected illumination associated with the position of the pointer 220. This allows the user to manually navigate through 24 hours of daylight, for example.

In a dynamic or automatic mode, the daylight cycle knob is an automatically turning timer knob. That is, the knob automatically turns around during the day, in such a way that after twenty-four hours, the knob has made exactly one cycle. The changing position of pointer 220, in combination with the plate indicator aligned with the current pointer position, provides visual feedback to the user, in addition to providing changing illumination associated with the currently aligned indicator. Of course, the illumination provided by the light source(s) 140 may change continuously as the knob 210 rotates continuously, similar to natural daylight, thus mimicking natural light during a day or 24 hour cycle.

The user may still override the automatically changing illumination by manually turning the knob 210 to align the pointer 220 with a desired position or indicator on the plate 230. A further mode switch and/or a specific user input action may enable a user to switch between manual and automatic mode. For instance, pressing the knob may toggle the system between the manual (or static) and automatic (or dynamic) modes. In the case where pressing the knob once activates the light sources to provide the selected illumination, the mode may be toggled or changed by pressing the knob in a different manner, such as pressing twice quickly, i.e., within a predetermined short time.

Instead of the knob turning, the dial plate 230, 330 may be turned by the user to align one of its indicators with the pointer 220 of the knob 210. The dial plate 230, 330 may continuously turn in the automatic mode so that different indicators are aligned with the knob pointer 220 at different times. The dial plate may also be activated by pressing it, for example, to activate the light sources to provide illumination. Toggling between the manual (or static) and automatic (or dynamic) modes may also be accomplished by pressing the dial or the knob in a different way than the manner of pressing to activate the light sources. For example, pressing the dial or knob once activates the light sources, while pressing the dial or the knob twice quickly, within a short predetermined time, such as one second, for example, toggles the mode between the manual (or static) and automatic (or dynamic) modes.

A visual indication of the mode may also be provided, such as one or more LEDs indicating 'manual' or 'automatic' mode. For example, two LEDs may be provided where one of the two LEDs is lit depending on, and indicating, the mode of operation. Alternatively, a single indicator, e.g., single LED, may be used where, for example, the default may be the automatic mode, and when the manual mode is entered, then an LED indicating manual mode is turned on, or vice verse (where the default is the manual mode when the LED is turned off, and the LED is turned on when the automatic mode is entered).

In the automatic mode, the knob or plate may just keep on turning but the user may set a 'timeshift' so that, for example, illumination associated with the indicator "dawn" is provided by the lights sources 140 at any desired time, such as 3AM, 10AM, etc. Of course even in the automatic mode, the user may also turn the knob 210, and/or turn the dial plate 230, 330 manually to align the pointer 210 with different indicators and optionally activate the knob or dial plate. In response to the new aligned indicator, (and the optional activation of the knob or dial plate, such as by pressing the knob or dial plate) illumination associated with the new aligned or selected indicator is provided, and the knob 210 or the dial plate 230, 330 resumes turning (when in the automatic mode).

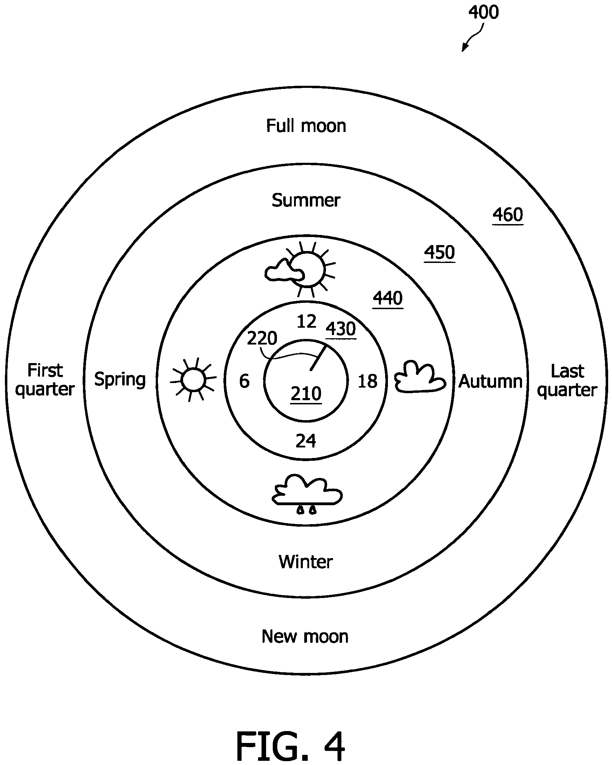

Multiple selectable dial plates with different indicators may also be provided, such as concentric overlapping plates 430, 440, 450, 460 as shown in the user interface 400 of Fig. 4. Illustratively, the inner dial plate 430 nearest the knob 210 may include numerals indicating time, for example (similar to the dial plate 330 of Fig. 3); the next plate 440 may include graphic or text referring to the different phases of the weather (such as sunny, partly sunny, cloudy and raining); the next plate 450 may include graphic or text referring to the different phases of the season of the year; and the next plate 460 may include graphic or text referring to the different phases of the moon.

The user may turn the four selectable plates 430, 440, 450, 460 to align desired plate indictors with the pointer or marker 220 of the knob 210. Activation of the system provides illumination commensurate with the various indicators of the various plates aligned with the pointer 220. System activation to provide illumination may simply be pressing the knob 210. In addition or alternatively, each plate may be activated or selected by the user simply by pressing the desired plate(s). Illustratively, the selected plates provide visual feedback to the user, such as being lit up to indicate that the particular plate has been selected and is active.

Thus, any number of the plates may be selected to provide a desired illumination commensurate with the combined indicators of the selected plates that are aligned with the knob pointer 220. As described, in the static mode, the illumination and/or the rotatable dial plates remain static and do not change or rotate, thus providing a constant or static illumination associated with a scene of the combined aligned indicators of the various active plates 430, 440, 450, 460; while in the automatic or dynamic mode, the plate or plates rotate with time to have different indicators aligned with the pointer 220 and the illumination changes to provide illumination commensurate with the aligned indicators, as commensurate scripts are executed by the processor to control the light source for providing changing illumination over a twenty hour cycle, for example.

Multiple scripts may be stored in the memory 130 associated with the various indicators on the knob or selectable dial plates. The processor 120 may be configured to select multiple scripts in the case where multiple indicators or multiple selected dials are aligned with the pointer 220, and calculate mean values of various light parameters, e.g., color, hue, intensity, saturation, direction etc., to control individual light sources to provide the desired lighting scenario based on the combination of the scripts. Of course, predetermined combined scripts may also be stored in the processor associated with light settings for combined indicators (of various selected plates 430, 440, 450, 460) that are aligned with the pointer 220.

In the dynamic mode, the user may override the settings by manually turning the dial. For example, the user can fast forward or 'timeshift' manually from dusk to midday to change lighting conditions to keep the area bright. Or the user may set a 'timeshift' to occur at a specified future time. After the 'timeshift', the mode may resume in the dynamic or static mode based on the user's particular desires, mode, light script(s) being executed and/or indicator(s) selection.

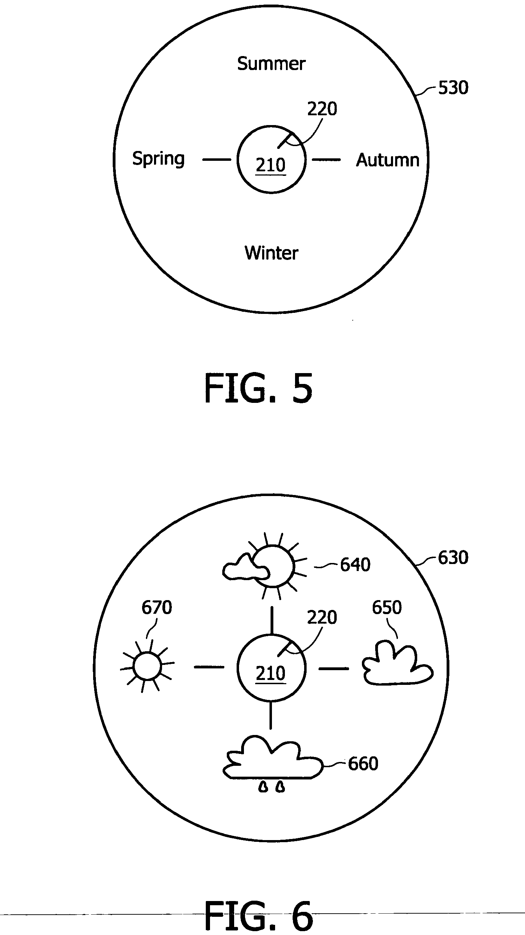

Of course, instead of overlapping dial plates, only a single dial plate may be provided which may include (or be connectable to) a display device(s) 170 to display various indicators which may be changed or selected (e.g., through a menu displayed on the display(s) of the dial-plate or other display devices) by the user though any input device, including a wireless device or remote control. Illustrative input devices may be a pointer in the case of touch sensitive displays, keyboard, mouse, etc. Thus, the user may select predetermined scenarios from tables or menus displayed on any associated display, such as a display included or formed as the dial-plate that surrounds the knob, referred to as a dynamic dial-plate (which may include its own processor and/or memory, or be connectable to the system processor 120 and memory 130). Accordingly, proper indicators associated with selected scenarios may be displayed on the display of the dynamic dial-plate. For example, when a 'Time' scenario is selected (e.g., through displayed menus, or though activation of the same knob 210 or different knob or switch to change scenarios such as 'Time,' 'Weather,' 'Season' or other scenarios), then reference numerals (e.g., as show in Fig. 3) may be displayed on the display of the dynamic dial-plate. Similarly, when a 'Season' scenario is selected, then indications of the four seasons (as show in Fig. 5) may be displayed on the display of the dynamic dial-plate, etc.

Of course, instead of overlapping multiple dial-plates, different individual stationary or dial plates may be provided as shown in Figs. 5-10, which show various embodiments having different indicators on the dial plate surrounding the knob, where some or all the dial plates may combined to provide overlapping dial plates as described in connection with Fig. 4. Of course, light scripts commensurate with the various indicators of the plates shown in Figs. 5-10 may be stored in the memory 130 for access and execution by the processor 120 to control the light source(s) 140 for providing illumination associated with the indicator(s) aligned with the pointer 220.

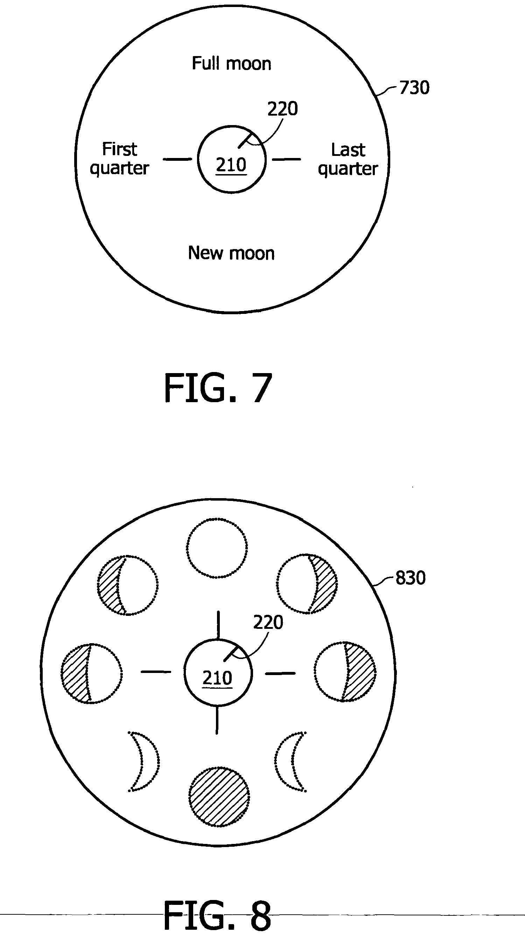

In particular, Fig. 5 shows a daylight cycle knob system for producing light commensurate with different seasonal light setting. The knob 210 is surrounded by indicators, e.g., text and/or graphics, which may be provided on a plate 530 or wall including indicators of the season of the year, namely, summer, autumn, winter and spring. Illustratively, the knob 210 is rotatable in a clockwise or counter-clockwise fashion. The plate 630 shown in Fig. 6 includes indications of the weather, such as partly sunny indicator 640, partly cloudy indicator 650, raining indicator 660 and sunny indicator 670. This embodiment may also include a 'local' weather setting, scene or scenario, which can be activated quickly by pressing the knob 610 twice or activated by some other mechanism. The local weather conditions may be obtained from Internet sites, for example, through any link, wired or wireless. In Figs. 7-8, the plate 730, 830 include indications of the phases on the moon, noted in text in Fig. 7 (e.g., 'Full moon,' 'Last quarter,' 'New moon,' and 'First quarter'), and graphic representations in Fig. 8.

Of course, more than one knob and/or more than one pointer with an associated plate(s) may be provided to control the illumination based on the combination of various indicators aligned with the various pointers of active knobs, for example. Illustratively, a moonphase knob and a weather knob may be active simultaneously, to provide illumination associated with the selected moonphase and weather. For example, the light which is created (e.g., at "night time") may be dependent on both the cloudiness and the phase of the moon, either as manually selected by the user by aligning appropriate indicators with pointer(s) of knob(s). Actual time, moon phase and cloudiness or weather may also be determined automatically by the lighting system 100 by accessing Internet sites, for example, that provide local information, or information related to any geographical area, which may also be manually provided by the user, or automatically determined by a GPS receiver accessible or connectable to the processor 120, for example.

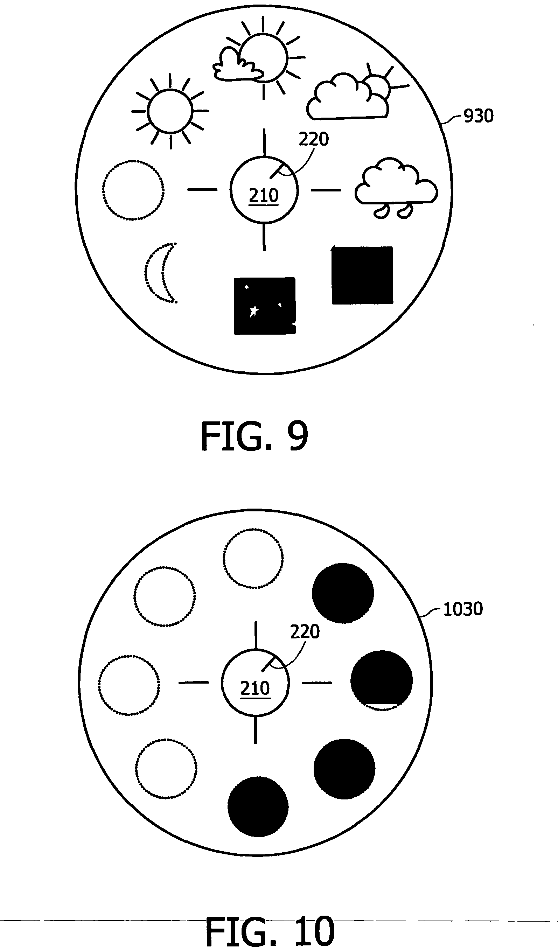

In Fig. 9, the wall or dial plate 930 surrounding the knob 210 includes indications of various conditions, e.g., in graphics, of a full sun, partial sun, partial cloud, rain, dark moonless night, starry night, quarter moon, and full moon. Such a dial combines various possible situations including sunlight (directional and with sharp shadows) to daylight (no direction and no shadows) to moonlight and starlight, thus providing versatile illumination and simple control of various light sources.

A dial with color indicators may also be provided. Various colors (e.g., of the day) may be included as indicators on the dial 1030 or wall surrounding the knob 210, as shown in Fig. 10, ranging from colors representing sunrise, daylight to early and late sunset and to dusk and night. In Fig. 10, the circular indicators each may be a different colored circle for user selection of the desired color. The colors may be associated with the time of day over a 24 hour cycle, from black at the 6 o'clock position representing night, getting brighter by moving clockwise to an early dawn and full dawn color at the 9 o'clock position, and the brightest color at the 12 o'clock position. The color indicators then fade back toward darkness, where an early dusk color may be shown at the 3 o'clock position, followed by late dusk and darkness back at the 6 o'clock position.

The daylight mimicking interactive lighting control system 100 may not only adapt the color and intensity of light but also change the direction of light with constant or varying rates. For instance, at dawn, the system 100 may closely mimic a sunrise with light coming from a predefined horizon in the environment. Depending on the lighting possibilities in the horizontal direction, the system may also simulate the movement of an artificial sun rising from one side (e.g., East) to another (e.g., West) throughout the day. Manipulating the daylight knob in such a system, would give the user the feeling of manipulating the position and light of the artificial "sun".

The daylight mimicking control system 100 has many applications during daily life where simple and intuitive illumination control is provided, as well as for particular situations, such as for time-zone travelers who want to adapt their biorhythm to their next destination, such as in hotel rooms, airports or airplanes. Similarly, people who work during different shifts, such as the nightshift, may use the control system 100 for better adjustment and comfort.

As described, various light setting based on one or more (combined) indicators aligned with the pointer 220 may be provided from a daylight cycle control mechanism towards a whole range of controls enabling a user to easily create desired (daylight) settings.

The timing, angle, color and exact lighting effects may also be made dependent on the season. For instance, in the summer, the lighting is very bright and coming from above or from a high angle, whereas in other seasons, the light comes from a lower angle with different color and brightness properties. Weather may also be taken into account to provide illumination with a particular weather selected by the user, or even automatically in response to the actual local weather, which may be manually provided by the user or automatically obtained by the lighting system, such as by accessing the Internet or other networks, through any wired or wireless means. The user, such as a shop owner, may program the processor 120 to control the light sources to provide illumination that simulates and creates a sunny atmosphere inside of the shop to attract customers, in response to detecting that it is raining outside, as determined by accessing an appropriate site on the Internet, and/or in response to a signal from a water or rain detector or sensor located outdoors near the vicinity of the shop or local area, for example.

Illustratively, when one of the indicators (of a single dial-plate 230 or multi-dial plates 430, 440, 450, 460) aligned with the pointer 220 is the sun (e.g., as a result of manual user selection or automatic alignment due to the moving or rotating dial-plate over time in the automatic mode), then the script associated with the "sun" indicator is accessed from the memory 130 and executed by the processor 120 to control the light sources to provide bright light with clear shadows (thus simulating a sunny environment). By contrast, when the indicator aligned with the pointer 220 is a "cloud," then execution of the properly associated script results in diffuse lighting which does not create shadows and the light is at a lower intensity level and with a different color temperature as compared to the illumination associated the "sun" indicator, for example.

Of course, any desired illumination may be associated with any desired indicator, such as a "romantic" indicator e.g., a graphic representation of a "heart" and the like, where the processor 120 executes the associated script and controls the light sources to provide subdued and accented lighting. A "party" indicator, such as hats and/or balloons may be associated with a script to provide other desired illuminations, such as activating strobe lights, and varying attributes (e.g., intensity, color, direction, hue, saturation, duration, etc.) of light emitted by various light sources. Additional indicators around a dial plate may be shown as well.

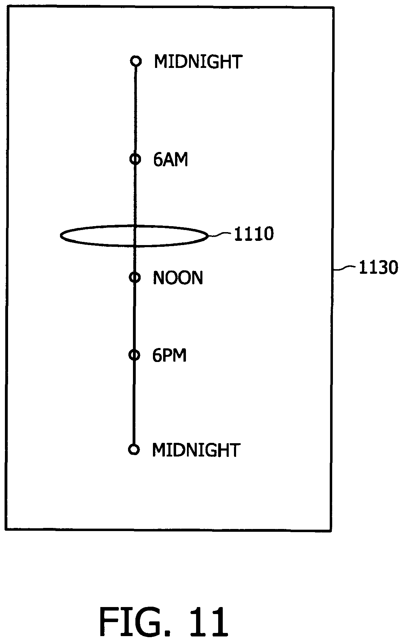

It should be understood that any type of knob, pointer and/or plate may be used instead or in addition to rotary knob(s) and dial plate(s). For example, a square, triangular or polygonal knob may be used. Further, a slider, static or dynamic rectangular plates, and overlapping plates may be used. For example, Fig. 11 shows an interactive lighting user interface comprising a slider 1110 and a plate 1130 where the slider 1110 can be placed in different light settings which may be indicated by different times of the day, for example.

Accordingly, an atmosphere creation system or daylight mimicking systems with intuitive and simple user interface may be provided for control of light sources to provide desired illumination. Such a system and/or user interface may be used in various domains, such as in a various room of homes, e.g., the living room, a bathroom, and in shop, hotels, meeting room, entertainment or convention centers, etc.

The processor 120 may also be configured to control other environmental systems, such as heating, air conditioning and humidity systems, in accordance with scripts associated with the aligned indicators. For example, when the pointer 220 is aligned with the rainy day position or indicator 660 on the plate 630 shown in Fig. 6, then the processor 120 may also be configured to increase humidity as well change the light conditions. When the pointer 220 is pointing to sunny day position/indicator 670 on the plate 630, then the processor 110 may control a dehumidifier to decrease the humidity as well as increase the light output from the light sources. Similarly, when the aligned indicator is associated with night-time, such as the moon indicator 260 on the plate 230 shown in Fig. 2, then the processor 110 may control the heating and/or air conditioning system to reduce heat or cold output.

Of course, the processor 110 may also be configured to control the temperature or other factors, in combination with the illumination association with the aligned indicators. Illustratively, different temperatures may be associated with the time of day indicators (on the dial plate 330 shown in Fig. 3) aligned with the pointer 220, as programmed by the user and stored as scripts in the memory 130. For example, in the winter, the temperature may be reduced during the day on weekdays, when the home is empty, while heating the home to a comfortable temperature on weekends. In the case the interactive lighting control system 100 is in a business or office environment or building, then comfortable heating levels are provided during the day, as indicated by the pointer 220 aligned with the time indicators of the dial plate 330, while at night, heating as well as lighting are reduced to conserve energy.

The present system and methods may be used for control systems of lighting effects, security, and the like. Various sensors and rules may be included, such as occupancy, motion and daylight sensors along with pre-defined rules, e.g., for weekdays and weekends, for normal business hours and off-hours or after-work hours, thus providing for control associated with predetermined rules. Other control systems that may include the present system and methods may be building automation systems; home control systems; atmosphere creation systems; including other control and automation environments, such as industrial, retail, institutional, residential, and the like.

It should be understood that, instead of only controlling light sources to provide lighting effects, other devices may also be controlled in addition (or in lieu of the lights) to create a desired atmosphere effect. For example, audio, video, and/or multimedia systems may be controlled in combination with the light sources to provide an atmosphere effect associated with the selected scene or lighting condition. Thus, the present system may provide for the creation of a desired atmosphere effect, similar to creating a desired lighting effect, where several types of controllable devices are controlled to create a total atmosphere that matches the selected or aligned indicator.

The total created atmosphere effect may include, for example, the generation of audio (music, soundscapes, nature sounds), smells, and/or images (on electronic displays) associated with the selected or aligned indicator, such as via scripts. For instance, for a sunny atmosphere (e.g., when a sunny scenario is selected such as when a 'sun' indicator is aligned with the pointer), in addition to (or in lieu of) providing a desired light effect, audio and/or video or multimedia devices may be controlled by the processor through execution of associated scripts to provide desired decoration or images, and/or music associated with the sunny scenario to provide a total sunny atmosphere. Different decorations, images, and/or music may be provided for a cloudy atmosphere effect, such as when a 'cloud' indicator is aligned with the pointer.

It should also be understood that various other user interface means may be used in addition or in lieu of a rotary or slideable knob. For example, the user interface may include speech, gesture and tangible object interfaces, such as displays with associated control and input devices, such as a keyboard, mice and/or pointer in the case of touch sensitive displays, where different displayed scenarios and/or or indicators may be selected by the user. User selection of scenarios and/or indicators may be through speech, in the case where the user interface means includes a speech recognizer as is well known in the art to recognize a spoken word, such as 'sun' and control the various controllable devices to provide a total atmosphere associated with 'sun.' Gestures may also be recognized through video cameras for example, where the user interface system may be trained to recognize and associate various gestures with desired total atmosphere and/or light effects, for example.

Of course, as it would be apparent to one skilled in the art of communication in view of the present description, various elements may be included in the system or network components for communication, such as transmitters, receivers, or transceivers, antennas, modulators, demodulators, converters, duplexers, filters, multiplexers etc. The communication or links among the various system components may be by any means, such as wired or wireless for example. The system elements may be separate or integrated together, such as with the processor. As is well-known, the processor executes instructions stored in the memory, for example, which may also store other data, such as predetermined or programmable settings related to system control.

Various modifications may also be provided as recognized by those skilled in the art in view of the description herein. The operation acts of the present methods are particularly suited to be carried out by a computer software program and/or scripts. The computer software program, for example, may contain modules corresponding to the individual steps or acts of the methods. The application data and other data are received by the controller or processor for configuring it to perform operation acts in accordance with the present systems and methods. Such software, application data as well as other data may of course be embodied in a computer-readable medium, such as an integrated chip, a peripheral device or memory, such as the memory or other memory coupled to the processor of the controller or light module.

The computer-readable medium and/or memory may be any recordable medium (e.g., RAM, ROM, removable memory, CD-ROM, hard drives, DVD, floppy disks or memory cards) or may be a transmission medium (e.g., a network comprising fiber-optics, the world-wide web, cables, and/or a wireless channel using, for example, time-division multiple access, code-division multiple access, or other wireless communication systems). Any medium known or developed that can store information suitable for use with a computer system may be used as the computer-readable medium and/or memory.

Additional memories may also be used. The computer-readable medium, the memory, and/or any other memories may be long-term, short-term, or a combination of long- and-short term memories. These memories configure the processor/controller to implement the methods, operational acts, and functions disclosed herein. The memories may be distributed or local and the processor, where additional processors may be provided, may be distributed or singular. The memories may be implemented as electrical, magnetic or optical memory, or any combination of these or other types of storage devices. Moreover, the term "memory" should be construed broadly enough to encompass any information able to be read from or written to an address in the addressable space accessed by a processor. With this definition, information on a network, such as the Internet, is still within or part of the memory, for instance, because the processor may retrieve the information from the network.

The processors and the memories may be any type of processor/controller and memory. The processor may be capable of performing the various described operations and executing instructions stored in the memory. The processor may be an application-specific or general-use integrated circuit(s). Further, the processor may be a dedicated processor for performing in accordance with the present system or may be a general-purpose processor wherein only one of many functions operates for performing in accordance with the present system. The processor may operate utilizing a program portion, multiple program segments, or may be a hardware device utilizing a dedicated or multi-purpose integrated circuit. Each of the above systems utilized for identifying the presence and identity of the user may be utilized in conjunction with further systems.

Of course, it is to be appreciated that any one of the above embodiments or processes may be combined with one or with one or more other embodiments or processes to provide even further improvements in finding and matching users with particular personalities, and providing relevant recommendations.

Finally, the above-discussion is intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the broader and intended spirit and scope of the present system as set forth in the claims that follow. The specification and drawings are accordingly to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same or different item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise; and
h) no specific sequence of acts or steps is intended to be required unless specifically indicated.

## Claims

1. A user interface (400) for mimicking natural light comprising:
a plurality of concentrically arranged selectable dials (430, 440) surrounding a pointer (220), each selectable dial having an associated set of a plurality of indicators, the plurality of indicators includes at least one representation of time of day, description of a natural light condition, season of year, weather, and phase of a moon,
wherein selection of at least two of the selectable dials (430, 440) activates at least one light source (140) to provide a light effect associated with at least two indicators pointed to by the pointer (220).

2. The user interface (400) of claim 1, wherein a selected dial turns as a function of time to change light attributes of light from the at least one light source (140) to provide the light associated with a current indicator pointed to by the pointer (220).

3. The user interface (400) of claim 1, further comprising a processor (120) configured to control the at least one light source (140) to provide the light effect having variable light attributes in accordance with different indicators pointed to by the pointer (220), wherein the processor is preferably operationally coupled to a memory (130) configured to store a plurality of light scripts for providing the light effect when executed by the processor (120).

4. The user interface (400) of claim 1, wherein attributes of the light effect includes at least one of direction and amount of diffusion, and wherein the at least one of the plurality of indicators includes at least one representation of sunrise, noon-sun, and sunset.

5. A lighting interaction system (100) comprising a user interface according to claim 1 and
at least one light source (140) to provide a light effect having variable light attributes;
wherein, in a dynamic mode, alignment of the pointer (220) with the plurality of indicators changes as a function of time to point to different indicators of the plurality of indicators and to change the light attributes in accordance with the different indicators.

6. The lighting interaction system (100) of claim 5, further comprising a processor (120) configured to control the at least one light source (140) to provide the light effect having the variable light attributes in accordance with the different indicators pointed to by the pointer (220), and preferably a memory (130) operationally coupled to the processor (120) and configured to store a pluralityof light scripts for providing the light effect when executed by the processor (120).

7. The lighting interaction system (100) of claim 5, wherein, in a static mode, the alignment of the pointer (220) and the light remain unchanged.

8. The lighting interaction system (100) of claim 5, wherein the light attributes includes at least one of direction and amount of diffusion of light associated with the indicator, and wherein first indicator includes at least one representation of sunrise, noon-sun, and sunset.

9. A method for mimicking natural light comprising the acts of:
aligning a pointer (220) with at least two indicators of two selectable dials (230) having a plurality of indicators associated with light settings;
activating at least one controllable light source (140) to provide a light effect having light attributes associated with the least two indicators; and
changing the light attributes in accordance with the different indicators.

10. The method of claim 9, further comprising the acts of:
changing a position of at least one of the pointer (220) and the selectable dials (230) as a function of time to align the pointer (220) with different indicators of the selectable dials (230).

11. The method of claim 9, wherein the at least two selectable dials are arranged on turnable concentric dials (430, 440), and are selectable by pressing the turnable concentric dials (430, 440).

## Patentansprüche

1. Benutzeroberfläche zum Nachahmen von natürlichem Licht, mit:
konzentrisch angeordneten auswählbaren Wählscheiben (430, 440), die einen Zeiger (220) umgeben, wobei jede auswählbare Wählscheibe eine dieser zugeordnete Menge von mehreren Anzeigeelementen aufweist, wobei die mehreren Anzeigeelemente zumindest eine Darstellung der Tageszeit, Beschreibung natürlicher Lichtverhältnisse, Jahreszeit, Wetter oder Phase eines Mondes beinhalten,
wobei durch das Auswählen von mindestens zwei der auswählbaren Wählscheiben (430, 440) mindestens eine Lichtquelle (140) aktiviert wird, um einen Lichteffekt vorzusehen, der mindestens zwei Anzeigeelementen zugeordnet ist, auf die der Zeiger (220) gerichtet ist.

2. Benutzeroberfläche (400) nach Anspruch 1, wobei sich eine ausgewählte Wählscheibe als eine Zeitfunktion dreht, um Lichteigenschaften des Lichts von der mindestens einen Lichtquelle (140) so zu verändern, dass das Licht vorgesehen wird, das einem Anzeigeelement, auf das der Zeiger (220) aktuell gerichtet ist, zugeordnet ist.

3. Benutzeroberfläche (400) nach Anspruch 1, die weiterhin einen Prozessor (120) umfasst, der so konfiguriert ist, dass er die mindestens eine Lichtquelle (140) so steuert, dass der Lichteffekt mit variablen Lichteigenschaften gemäß verschiedenen Anzeigeelementen, auf die der Zeiger (220) gerichtet ist, vorgesehen wird, wobei der Prozessor vorzugsweise mit einem Speicher (130) betriebsbereit verbunden ist, der so eingerichtet ist, dass er eine Mehrzahl von Licht-Scripts speichert, um bei Ausführung durch den Prozessor (120) den Lichteffekt vorzusehen.

4. Benutzeroberfläche (400) nach Anspruch 1, wobei Eigenschaften des Lichteffekts zumindest eine Streuungsrichtung oder einen Streuungsumfang beinhalten, und wobei das mindestens eine der mehreren Anzeigeelemente zumindest eine Darstellung des Sonnenaufgangs, der Mittagssonne oder des Sonnenuntergangs beinhaltet.

5. Beleuchtungsinteraktionssystem (100) mit einer Benutzeroberfläche nach Anspruch 1 sowie
mindestens einer Lichtquelle (140), um einen Lichteffekt mit variablen Lichteigenschaften vorzusehen;
wobei sich die Ausrichtung des Zeigers (220) zu den mehreren Anzeigeelementen in einem dynamischen Modus als eine Zeitfunktion verändert, um auf verschiedene der mehreren Anzeigeelemente zu zeigen und die Lichteigenschaften gemäß den verschiedenen Anzeigeelementen zu verändern.

6. Beleuchtungsinteraktionssystem (100) nach Anspruch 5, das weiterhin einen Prozessor (120), der so konfiguriert ist, dass er die mindestens eine Lichtquelle (140) steuert, um den Lichteffekt mit den variablen Lichteigenschaften gemäß den verschiedenen Anzeigeelementen, auf die der Zeiger (220) gerichtet ist, vorzusehen, sowie vorzugsweise einen Speicher (130) umfasst, der mit dem Prozessor (120) betriebsbereit verbunden und so eingerichtet ist, dass er eine Mehrzahl von Licht-Scripts speichert, um bei Ausführung durch den Prozessor (120) den Lichteffekt vorzusehen.

7. Beleuchtungsinteraktionssystem (100) nach Anspruch 5, wobei die Ausrichtung des Zeigers (220) und des Lichts in einem statischen Modus unverändert bleiben.

8. Beleuchtungsinteraktionssystem (100) nach Anspruch 5, wobei die Lichteigenschaften zumindest eine Streuungsrichtung oder einen Streuungsumfang, die/der dem Anzeigeelement zugeordnet ist, beinhalten und wobei das erste Anzeigeelement zumindest eine Darstellung des Sonnenaufgangs, der Mittagssonne oder des Sonnenuntergangs beinhaltet.

9. Verfahren zum Nachahmen von natürlichem Licht, das die folgenden Schritte umfasst, wonach:
ein Zeiger (220) zu mindestens zwei Anzeigeelementen von zwei auswählbaren Wählscheiben (230) mit mehreren, Lichteinstellungen zugeordneten Anzeigeelementen ausgerichtet wird;
mindestens eine steuerbare Lichtquelle (140) aktiviert wird, um einen Lichteffekt vorzusehen, der mindestens zwei Anzeigeelementen zugeordnete Lichteigenschaften aufweist; und
die Lichteigenschaften gemäß den verschiedenen Anzeigeelementen verändert werden.

10. Verfahren nach Anspruch 9, wonach weiterhin
eine Position von zu zumindest dem Zeiger (220) oder der auswählbaren Wählscheibe (230) als eine Zeitfunktion verändert wird, um den Zeiger (220) zu verschiedenen Anzeigeelementen der auswählbaren Wählscheiben (230) auszurichten.

11. Verfahren nach Anspruch 9, wobei die mindestens zwei auswählbaren Wählscheiben auf drehbaren, konzentrischen Wählscheiben (430, 440) angeordnet und durch Druck auf die drehbaren, konzentrischen Wählscheiben (430, 440) auswählbar sind.

## Revendications

1. Interface utilisateur (400) permettant d'imiter la lumière naturelle et comprenant :
une pluralité de cadrans sélectionnables (430, 440) disposés de façon concentrique et entourant un pointeur (220), chaque cadran sélectionnable ayant un ensemble d'une pluralité d'indicateurs qui lui est associé, la pluralité d'indicateurs comprenant au moins une représentation de l'heure de la journée, de la description d'une condition de lumière naturelle, de la saison de l'année, du temps, et de la phase lunaire,
dans laquelle la sélection d'au moins deux des cadrans sélectionnables (430, 440) active au moins une source de lumière (140) pour procurer un effet de lumière associé à au moins deux indicateurs sur lesquels pointe le pointeur (220).

2. Interface utilisateur (400) selon la revendication 1, dans laquelle un cadran sélectionné tourne en fonction de l'heure pour modifier les attributs lumineux d'une lumière émanant de l'au moins une source de lumière (140) pour fournir la lumière associée à l'indicateur actuel sur lequel pointe le pointeur (220).

3. Interface utilisateur (400) selon la revendication 1, comprenant en outre un processeur (120) conçu pour commander l'au moins une source de lumière (140) pour procurer l'effet de lumière ayant des attributs lumineux variables en fonction des différents indicateurs sur lesquels pointe le pointeur (220), dans laquelle le processeur est de préférence couplé fonctionnellement à une mémoire (130) conçue pour stocker une pluralité de scripts de lumière destinés à procurer un effet de lumière lorsqu'ils sont exécutés par le processeur (120).

4. Interface utilisateur (400) selon la revendication 1, dans laquelle les attributs de l'effet de lumière comprennent au moins soit la direction, soit la quantité de diffusion, et dans laquelle l'au moins un de la pluralité d'indicateurs comprend au moins une représentation du lever de soleil, du soleil de midi et du coucher de soleil.

5. Système d'interaction d'éclairage (100) comprenant une interface utilisateur selon la revendication 1 et
au moins une source de lumière (140) pour procurer un effet de lumière ayant des attributs lumineux variables ;
dans lequel, en mode dynamique, l'alignement du pointeur (220) avec la pluralité d'indicateurs change en fonction de l'heure pour pointer sur différents indicateurs de la pluralité d'indicateurs et pour modifier les attributs lumineux en fonction des différents indicateurs.

6. Système d'interaction d'éclairage (100) selon la revendication 5, comprenant en outre un processeur (120) conçu pour commander l'au moins une source de lumière (140) pour procurer l'effet de lumière ayant les attributs lumineux variables en fonction des différents indicateurs sur lesquels pointe le pointeur (220), et de préférence une mémoire (130) couplée fonctionnellement au processeur (120) et conçue pour stocker une pluralité de scripts de lumière destinés à procurer l'effet de lumière lorsqu'ils sont exécutés par le processeur (120).

7. Système d'interaction d'éclairage (100) selon la revendication 5, dans lequel, en mode statique, l'alignement du pointeur (220) et la lumière restent inchangés.

8. Système d'interaction d'éclairage (100) selon la revendication 5, dans lequel les attributs lumineux comprennent au moins soit la direction, soit la quantité de diffusion de lumière associées à l'indicateur, et dans lequel un premier indicateur comprend au moins une représentation du lever de soleil, du soleil de midi et du coucher de soleil.

9. Procédé d'imitation de la lumière naturelle, comprenant les actions qui consistent :
à aligner un pointeur (220) avec au moins deux indicateurs de deux cadrans sélectionnables (230) ayant une pluralité d'indicateurs associés à des réglages lumineux ;
à activer au moins une source de lumière contrôlable (140) pour procurer un effet de lumière ayant des attributs lumineux associés auxdits au moins deux indicateurs ; et
à modifier les attributs lumineux en fonction des différents indicateurs.

10. Procédé selon la revendication 9, comprenant en outre les actions qui consistent :
à modifier la position au moins soit du pointeur (220) soit des cadrans sélectionnables (230) en fonction de l'heure pour aligner le pointeur (220) avec différents indicateurs des cadrans sélectionnables (230).

11. Procédé selon la revendication 9, dans lequel les au moins deux cadrans sélectionnables sont disposés sur des cadrans concentriques tournants (430, 440), et peuvent être sélectionnés par appui sur les cadrans concentriques tournants (430, 440).
